# EUROPÄISCHE PATENTANMELDUNG

(11) **EP 2 308 938 A1**
(43) Veröffentlichungstag der Anmeldung: **13.04.2011**
(21) Anmeldenummer: 09012736.6
(22) Anmeldetag: 08.10.2009
(51) Int. Cl.: C09J 161/06, C09J 161/20

(54) **Klebstoffe**

(71) Anmelder: Cognis IP Management GmbH, 40589 Düsseldorf (DE)
(72) Erfinder: Birnbrich Paul, 42719 Solingen (DE); Thomas, Hans-Josef, 41352 Korschenbroich (DE)

(57) **Zusammenfassung**

Vorgeschlagen wird die Verwendung von Zusammensetzungen, die erhältlich sind, indem man den Cardanol-haltigen Rohstoff CNSL (cashew nut shell liquid) mit (a) Ammoniak oder einem Amin, das mindestens eine primäre oder mindestens zwei sekundäre Aminogruppe enthält und (b) Formaldehyd umsetzt, als Klebstoffe.

## Beschreibung

### Gebiet der Erfindung

Die Erfindung betrifft die Verwendung von Zusammensetzungen, die erhältlich sind, indem man den Cardanol-haltigen Rohstoff CNSL (cashew nut shell liquid) mit (a) Ammoniak oder einem Amin, das mindestens eine primäre oder mindestens zwei sekundäre Aminogruppen enthält, und (b) Formaldehyd umsetzt, als Klebstoffe.

### Stand der Technik

Phenalkamine sind eine noch relativ junge Klasse von Epoxidharzhärtem. Es handelt sich dabei um Umsetzungsprodukte (Kondensationsprodukte) von Cardanol (I), das chemisch ein C₁₅-Alkylphenol darstellt und ein Hauptbestandteil des aus den Schalen von Cashew-Nüssen zugänglichen Öls (des sogenannten CNSL = cashew nut shell liquid) ist, mit aliphatischen (primären bzw. sekundären ) Aminen und Formaldehyd.

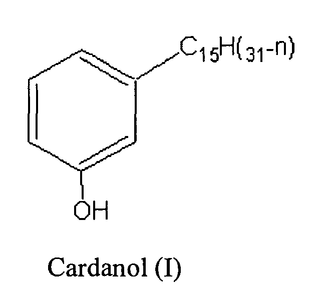

Es sei ausdrücklich betont, dass Phenalkamine als solche nicht zu Klebezwecken eingesetzt werden, sondern lediglich als Epoxidharzhärter.

E. Calo et al. beschreiben in Green Chemistry, 2007,9, S. 754-759 ein Verfahren, bei dem sie Cardanol in ein bestimmtes Benzoxazin-Monomer überführen. Die Synthese dieses speziellen Benzoxazins (im Artikel mit Bz abgekürzt) wird auf S. 756, linke Spalte, zweiter Absatz beschrieben. Mit dieser Verbindung Bz werden anschließend verschiedene Polymerisations-Reaktionen untersucht.

DE-A-102007057951 beschreibt die Verwendung von Zusammensetzungen, die erhältlich sind, indem man den Cardanol-haltigen Rohstoff CNSL (cashew nut shell liquid) mit (a) Ammoniak oder einem Amin, das mindestens eine primäre Aminogruppe (NH₂-Gruppe) enthält und (b) Formaldehyd umsetzt, für die Beschichtung von Oberflächen fester Substrate. Über eine mögliche Verwendung dieser Zusammensetzungen als Klebstoffe ist in DE-A-102007057951 nichts offenbart.

### Beschreibung der Erfindung

Die Aufgabe der vorliegenden Erfindung bestand darin, Zusammensetzungen zur Verfügung zu stellen, die sich als Klebstoffe eignen.

Erfindungsgegenstand ist die Verwendung von Zusammensetzungen, die erhältlich sind, indem man den Cardanol-haltigen Rohstoff CNSL (cashew nut shell liquid) mit (a) Ammoniak oder einem Amin, das mindestens eine primäre oder mindestens zwei sekundäre Aminogruppen enthält, und (b) Formaldehyd umsetzt, als Klebstoffe.

Stellt man die erfindungsgemäß einzusetzende Zusammensetzung her, indem man den Cardanol-haltigen Rohstoff CNSL (cashew nut shell liquid) mit (a) Ammoniak oder einem Amin, das mindestens eine primäre oder mindestens zwei sekundäre Aminogruppen enthält, und (b) Formaldehyd umsetzt, so kann dabei im weiteren Sinne von einer Mannich-Reaktion gesprochen werden. Bekanntlich handelt es sich bei der Mannich-Reaktion um eine Aminoalkylierung von organischen Verbindungen, die in alphaStellung zu einer funktionellen Gruppe CH-acid sind. Dabei setzt man derartige CH-acide Verbindungen mit Formaldehyd und Ammoniak bzw. einem primären oder sekundären Amin um. Beim Einsatz von CNSL als CH-acide Verbindung erhält man Mischungen (Zusammensetzungen), die unterschiedliche Benzoxazine sowie Aminoalkylierungsprodukte des Cardanols enthält.

Es sei darauf hingewiesen, dass die Verwendung der erfindungsgemäßen Zusammensetzung als Klebstoffe nicht in dem oben zitierten Artikel von E. Calo et al. offenbart ist. Der Artikel beschreibt Polymerisationsreaktionen eines einzelnen Monomers (Bz), während es gemäß der vorliegenden Erfindung darauf ankommt, eine Mischung (Zusammensetzung), die unterschiedliche Benzoxazine sowie Aminoalkylierungsprodukte des Cardanols enthält, einzusetzen und zwar für einen ganz speziellen Zweck, nämlich als Klebstoffe. Ebenso verhält es sich mit der oben zitierten Schrifte DE-A-102007057951: auch hier wird die Verwendung der in dieser Schrift genannten Zusammensetzungen als Klebstoffe weder offenbart noch nahegelegt.

### Zum CNSL

Das im Zuge der vorliegenden Erfindung eingesetzte CNSL ist natürlichen Ursprungs - es wird aus den äußeren Schalen von Cashewnüssen (Nüsse des Baumes Anacardium Occidentale) durch Extraktion gewonnen und kann hinsichtlich seiner Zusammensetzung variieren. Typischerweise enthält es 60-65% Cardanol, 2-10% Cardol, 10-15% Oligomere/Polymere und 0-2% 2-Methylcardanol und Anacardic acid.

In einer Ausführungsform setzt man rohes CNSL ein.

In einer Ausführungsform setzt man aufgereinigtes CNSL ein, wobei die Aufreinigung durch Vorbehandlung und/oder Destillation erfolgen kann.

Es kann auch gewünscht sein, CNSL einer Vorbehandlung zu unterziehen, um Verunreinigungen zu entfernen. Vorbehandlung und Destillation von CNSL können auch kombiniert werden, insbesondere dann, wenn es gewünscht ist, ein farbstabiles CNLS mit besonders hohem Gehalt an Cardanol einzusetzen. Besonders bevorzugt als Vorbehandlung sind chemische Vorbehandlungen, dabei sind die Vorbehandlungen mit Borsäure und mit Essigsäureanhydrid, wie sie in WO 2006/108545 A1 und in WO 2006/108545 A1 beschrieben sind, besonders bevorzugt. In einer Ausführungsform wird CNSL im Rahmen der vorliegenden Erfindung in einer Qualität eingesetzt, wie es nach einem der Verfahren gemäß WO 2006/108545 A1 und in WO 2006/108545 A1 erhalten wird.

### Zur Komponente (a)

Als Komponente (a) wird wie oben ausgeführt Ammoniak oder ein Amin eingesetzt, das mindestens eine primäre oder mindestens zwei sekundäre Aminogruppen enthält. Wie in der Fachwelt üblich sind primäre Aminogruppen NH2-Gruppen und sekundäre Aminogruppen NH-Gruppen, d.h. das Stickstoffatom einer primären Aminogruppe enthält zwei Wasserstoffatome und das Stickstoffatom einer sekundären Aminogruppe enthält ein Wasserstoffatom.

In einer Ausführungsform setzt man als Komponente (a) Ammoniak ein.

In einer weiteren Ausführungsform setzt man als Komponente (a) ein Amin ein, das mindestens eine primäre Aminogruppe enthält.

In einer weiteren Ausführungsform setzt man als Komponente (a) ein Amin ein, das ausgewählt ist aus der Gruppe der Polyamine, wobei für diese Polyamine folgende Maßgabe gilt: Sie müssen mindestens zwei Aminogruppen enthalten, die primäre oder sekundäre Aminogruppen sind. Pro Molekül Polyamin müssen also in dieser Ausführungsform entweder zwei primäre Aminogruppen vorliegen oder zwei sekundäre Aminogruppen oder eine primäre und eine sekundäre Aminogruppe. Sofern die Polyamine über die zwei obligatorischen Aminogruppen, die primäre und/oder sekundäre Aminogruppen sind, hinaus noch weitere Aminogruppen enthalten, können diese primär, sekundär oder tertiär sein.

Es können aliphatische, aromatische, aliphatisch-aromatische, cycloaliphatische und heterocyclische Polyamine eingesetzt werden.

Beispiele für geeignete Amine sind: Alkylamine mit linearen oder verzweigten Alkylketten wie n-Butylamin, tert.-Butylamin, n-Pentylamin, n-Hexylamin, 2-Ethylhexylamin, n-Octylamin; aromatische Amine wie Anilin, Toluidin; alkylaromatische Amine wie Benzylamin; Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, 1,3-Bis(aminomethyl)cyclohexan, die Mischung der über eine Methylenbrücke verknüpften Poly(cyclohexyl-aromischen)amine (auch als MBPCAA bekannt) und Polyaminoamide.

In einer bevorzugten Ausführungsform setzt man als Komponente (a) ein monofunktionelles primäres Amin der Formel R-NH₂ (I) ein, wobei der Rest R eine Alkylgruppe mit insgesamt 1 bis 30 C-Atomen oder eine Arylgruppe oder eine mit ein oder mehreren Alkylresten substituierte Arylgruppe mit insgesamt bis 30 C-Atomen bedeutet.

### Herstellung und Einsatz der Zusammensetzungen

Bei der Mannich-Reaktion von Cardanol mit Formaldehyd und Aminen entstehen Mischungen von Benzoxazinen sowie höhermolekulareren Produkten und unreagiertem Cardanol. Diese Mischungen eignen sich ohne weitere Aufreinigung als Klebstoffe.

Die erfindungsgemäßen Zusammensetzungen werden auf die Oberflächen der miteinander zu verklebenden Substrate aufgebracht, wobei es in vielen Fällen bereits ausreichend ist, die erfindungsgemäßen Zusammensetzungen nur auf die Oberfläche eines der miteinander zu verklebenden Substrate aufzubringen. Die Art und Weise der Aufbringung ist dabei an sich nicht kritisch. Beispiele für geeignete Methoden der Aufbringung sind etwa: Rakeln, Streichen, Rollen, Ziehen (Spachtel), Wischen, Gießen, Tropfen, Spritzen.

Anschließend, werden die miteinander zu verklebenden Substrate miteinander in Kontakt gebracht, wobei der Klebstoff sich zwischen den beiden Substraten befindet.

In einer Ausführungsform appliziert man die erfindungsgemäß als Klebstoffe einzusetzenden Zusammensetzungen in heißer Form, d.h. man erwärmt die Zusammensetzungen auf Temperaturen im Bereich von 50 °C bis 200 °C und insbesondere 100 °C bis 150 °C und appliziert sie als Heisskleber auf die miteinander zu verbindenden Substrate, die anschließend miteinander in Kontakt gebracht werden.

Nach einer Aushärtezeit können die nunmehr miteinander verklebten Substrate auch mechanisch belastet werden. Die Aushärtezeit hängt im wesentlichen von der Temperatur und der Dicke der Klebstoffschicht ab. Man lässt in der Regel bei Temperaturen zwischen 100°C und 300°C und insbesondere 200 °C und 250 °C aushärten. Je nach Schichtdicke der Klebstoffschicht und Aushärtetemperatur liegen die Aushärtungszeiten im Bereich von wenigen Sekunden bis hin zu mehreren Stunden.

Die miteinander zu verklebenden Substrate werden insbesondere ausgewählt aus der Gruppe der Metalle, mineralischen Materialien (wie Stein, Beton, Keramik), Kunststoffe, Glas, Holz, Fasern; dabei sind Metalle, insbesondere Eisen, Stahl, Kupfer, Aluminium, Weißblech, Nickel und Gold besonders bevorzugt.

In einer Ausführungsform werden Substrate miteinander verklebt, die aus demselben Material bestehen.

In einer Ausführungsform werden Substrate miteinander verklebt, die aus unterschiedlichen Materialien bestehen.

### Beispiel 1 (erfindungsgemäße Zusammensetzung)

272,9 g Cardanol wurden zusammen mit 30,7 g Ammoniak-Lösung, 25%-ig sowie 116,2 g Formaldehydlösung (35%-ig in Wasser) in einem 1-Liter-Dreihalskolben, ausgestattet mit Rührer, Thermometer und Rückflusskühler unter Stickstoff-Spülung 3 Stunden auf 75 - 80 °C erhitzt. Das noch warme Reaktionsgemisch wurde in einen Scheidetrichter überführt. Die wässrige Phase setzte sich rasch ab und wurde abgelassen. Die Ölphase wurde mit 100 ml vollentsalztem Wasser gewaschen. Der Vorgang wurde wiederholt, bis das Waschwasser neutral war. Die Ölphase wurde anschließend im Vakuum bei maximal 70 °C getrocknet.
272,6 g einer klaren, rotbraunen, öligen Flüssigkeit mit einer Aminzahl von 57,2 mg KOH/g wurden erhalten.

### Beispiel 2 (Zusammensetzung zum Vergleich)

40 g des in Beispiel 1 gewonnenen Materials wurden auf eine Chromatographiesäule, (gefüllt mit 300g Kieselgel 60, Korngröße 0,063-0,2mm als stationäre Phase, aufgeschlämmt mit Dichlormethan als mobile Phase), mit wenig Dichlormethan als Lösemittel überführt. Das Eluat wurde in 12 Fraktionen getrennt und per Dünnschichtchromatographie (DC-Fertigplatten Kieselgel 60, Merck, mit Dichlormethan als mobile Phase), untersucht. Es wurde eine Phase mit einer Substanz mit RF 0,95 als Hauptkomponente identifiziert und die entsprechenden Fraktionen vereinigt und am Rotavapor bei 60°C Badtemperatur eingeengt. Am Ende wurde das restliche Dichlormethan im Vakuum entfernt. Dabei wurden 9,1g einer hellgelben niedrigviskosen Flüssigkeit mit einer Aminzahl von 81,6 mg KOH/g erhalten. Bei der erhaltenen Verbindung handelt es sich nach Untersuchungen der Anmelderin um das in der oben genannten Publikation von E. Calo et al. beschriebene spezielle Benzoxazin-Monomer Bz.

### Klebeversuche

Es wurden Klebeprüfungen in Anlehnung an ISO 4587 durchgeführt. Dazu wurde eine überlappende Verklebung mit einer Fläche von 625 mm² auf mit Aceton entfetteten Rohstahl-Prüfkörpern der Abmessungen 100 x 25 x 1 mm hergestellt. Die Verklebungen wurden mittels Holzwäscheklammer fixiert und im Trockenschrank bei 220 °C für 30 Minuten ausgehärtet. Nach Abkühlung auf Raumtemperatur wurde die Zugscherfestigkeit nach ISO 4587 gemessen. Die Ergebnisse sind in Tabelle 1 dargestellt:

**Tabelle 1**

| Prüfkörper Beispiel Nr. | Aushärtezeit (Minuten) | Aushärtetemperatur | Schichtstärke Verklebung [mm] | Zugfestigkeit [MPa] | Bruchbild |
|---|---|---|---|---|---|
| Beispiel 1 | 30 | 220°C | 0,05 | 2,25 | Kohäsionsbruch |
| Beispiel 1 | 30 | 220°C | 0,1 | 1,94 | Kohäsionsbruch |
| Beispiel 1 | 30 | 220°C | 0,1 | 1,97 | Kohäsionsbruch |
| Beispiel 1 | 30 | 220°C | 0,1 | 2,07 | Kohäsionsbruch |
| Beispiel 1 | 30 | 220°C | 0,1 | 2,05 | Kohäsionsbruch |
| Beispiel 2 | 30 | 220°C | - | k.A.*) | - |
| Beispiel 2 | 30 | 220°C | - | k.A.*) | - |
| Beispiel 2 | 30 | 220°C | - | k.A.*) | - |
| Beispiel 2 | 30 | 220°C | - | k.A.*) | - |
| Beispiel 2 | 30 | 220°C | - | k.A.*) | - |

| | | | | | |
|---|---|---|---|---|---|
| *) "k.A" bedeutet "keine Aushärtung" und ist so zu verstehen: die Bleche konnten nach Abkühlung von Hand wieder voneinander gelöst werden, die Klebfläche war klebrig-flüssig. | | | | | |

## Patentansprüche

1. Verwendung von Zusammensetzungen, die erhältlich sind, indem man den Cardanol-haltigen Rohstoff CNSL (cashew nut shell liquid) mit (a) Ammoniak oder einem Amin, das mindestens eine primäre oder mindestens zwei sekundäre Aminogruppen enthält, und (b) Formaldehyd umsetzt, als Klebstoffe.

2. Verwendung nach Anspruch 1, wobei man rohes CNSL einsetzt.

3. Verwendung nach Anspruch 1, wobei man aufgereinigtes CNSL einsetzt, wobei die Aufreinigung durch Vorbehandlung und/oder Destillation erfolgen kann.

4. Verwendung nach einem der Ansprüche 1 bis 3, wobei man als Komponente (a) Ammoniak einsetzt.

5. Verwendung nach einem der Ansprüche 1 bis 3, wobei man als Komponente (a) ein Amin einsetzt, das mindestens eine primäre oder mindestens zwei sekundäre Aminogruppen enthält.

6. Verwendung nach einem der Ansprüche 1 bis 3, wobei man als Komponente (a) ein Amin einsetzt, das ausgewählt ist aus der Gruppe der Polyamine, wobei diese Polyamine mindestens zwei Aminogruppen enthalten, die primäre oder sekundäre Aminogruppen sind.

7. Verwendung nach einem der Ansprüche 1 bis 6, wobei die zu verklebenden Substrate ausgewählt werden aus der Gruppe der Metalle, mineralischen Materialien, Kunststoffe, Holz, Glas und Fasern.

8. Verwendung nach einem der Ansprüche 1 bis 7, wobei die Aushärtung des Klebstoffes thermisch erfolgt.
